# EUROPEAN PATENT APPLICATION

(11) **EP 4 421 107 A1**
(43) Date of publication of application: **28.08.2024**
(21) Application number: 22884081.5
(22) Date of filing: 21.10.2022
(51) Int. Cl.: C08G 63/78, B01J 19/00, B01J 19/20, C08G 63/06, C08G 63/08

(54) **RESIN POLYMERIZATION REACTION APPARATUS AND RESIN DISCHARGE METHOD**

(30) Priority: 22.10.2021 KR 20210141469
(71) Applicant: LG Chem, Ltd., Yeongdeungpo-gu Seoul 07336 (KR)
(72) Inventor: KIM, Jun Soo, Daejeon 34122 (KR); SONG, Young Soo, Daejeon 34122 (KR); IM, Ye Hoon, Daejeon 34122 (KR); CHOE, Dong Cheol, Daejeon 34122 (KR); CHOI, Jong Young, Daejeon 34122 (KR)
(74) Representative: Goddar, Heinz J.
(86) International application number: PCT/KR2022/016106
(87) International publication number: WO 2023/068859

(57) **Abstract**

A resin polymerization reaction device according to one example of the present invention preferably comprises a reactor in which a resin is accommodated and a resin polymerization reaction is performed; a stirring part installed inside the reactor to agitate the resin; and a discharge port located at the lower portion of the reactor and provided with a plurality of discharge openings having an opening diameter within a range of 3/80 to 10/80 of the diameter of the discharge port.

## Description

### Technical Field

The present invention relates to a resin polymerization reaction device and a resin discharge method, and more particularly, relates to a resin polymerization reaction device and a resin discharge method capable of increasing a discharge rate of a resin by increasing the discharge temperature of the resin through temperature control of a reactor to lower the viscosity of the resin, and improving a discharge efficiency of a resin by adjusting a discharge area through a perforated plate.

This application claims the benefit of priority based on Korean Patent Application No. 10-2021-0141469 dated October 22, 2021, the disclosure of which is incorporated herein by reference in its entirety.

### Background Art

In general, a resin is discharged from a polymerization reactor in a viscous state by introducing a monomer and an initiator together into the polymerization reactor, and then undergoing a polymerization reaction. After completion of the polymerization reaction, nitrogen gas is injected into the upper portion of the polymerization reactor to discharge the resin from the polymerization reactor.

The resin in the polymerization reactor (10) is discharged from a discharge port by the force of nitrogen gas pressurization. At this time, the discharge rate of the resin varies according to the discharge area of the discharge port (11). The discharge rate of the resin increases as the discharge area of the discharge port increases.

If the discharge rate of the resin is faster than the rate at which the nitrogen gas moves from the upper portion to the lower portion of the polymerization reactor, a situation arises in which the resin is discharged to the outside through the discharge port before the nitrogen gas reaches the lower portion of the polymerization reactor. As a result, the resin that has not been discharged remains in the lower portion of the polymerization reactor.

Then, in the polymerization reactor (10), if the discharge area of the discharge port (11) is narrow, the discharge rate of the resin becomes slow, and accordingly, the resin solidifies around the discharge port, thereby causing a problem of clogging the discharge port.

### Disclosure

### Technical Problem

The present invention is intended to provide a resin polymerization reaction device and a resin discharge method capable of increasing a discharge rate of a resin by increasing the discharge temperature of the resin through temperature control of a reactor to lower the viscosity of the resin, and improving a discharge efficiency of a resin by adjusting a discharge area through a perforated plate.

### Technical Solution

A resin polymerization reaction device according to one example of the present invention preferably comprises a reactor in which a resin is accommodated and a resin polymerization reaction is performed; an agitation part installed inside the reactor to agitate the resin; and a discharge port located at the lower portion of the reactor and provided with a plurality of discharge openings having an opening diameter within a range of 3/80 to 10/80 of the diameter of the discharge port.

In one example of the present invention, the plurality of discharge openings has preferably the same diameter.

In one example of the present invention, the plurality of discharge openings is preferably arranged apart from each other along a circumferential direction of a virtual concentric circle having a predetermined radius based on the center of the discharge port.

In one example of the present invention, the virtual concentric circle preferably has a diameter within a range of 1/4 to 5/7 of the diameter of the discharge port.

In one example of the present invention, the plurality of discharge openings is preferably arranged radially apart from each other based on the center of the discharge port.

In one example of the present invention, it is preferable to further comprise at least one perforated plate provided with the plurality of discharge openings and detachably coupled to the discharge port.

In one example of the present invention, it is preferable that the perforated plate is provided with the plurality of discharge openings having the same diameter within the range of the opening diameter, and the range of the opening diameter is within a range of 3/80 to 10/80 of the diameter of the discharge port.

In one example of the present invention, the reactor is preferably temperature-controlled so that the discharge preheating temperature of the resin is higher than the polymerization reaction temperature of the resin.

In one example of the present invention, the reactor preferably heats the resin to the discharge preheating temperature after the polymerization reaction completion of the resin.

In one example of the present invention, the discharge preheating temperature is preferably a temperature in a range of 20 degrees to 50 degrees higher than the polymerization reaction temperature.

In one example of the present invention, the discharge preheating temperature is preferably a temperature 30 degrees higher than the polymerization reaction temperature.

In one example of the present invention, the stirring part preferably comprises a stirring bar installed inside the reactor in the discharge direction of the resin; a stirring motor providing the stirring bar with a rotational force; an upper support installed on the upper portion of the stirring bar perpendicular to the discharge direction; a lower support installed on the lower portion of the stirring bar parallel to the upper support; and a stirring wing coupled to the upper support and the lower support in a double helix structure.

In one example of the present invention, the stirring wing preferably comprises a first stirring wing having a spiral structure, wherein the upper end is coupled to one end of the upper support and the lower end is coupled to one end of the lower support; and a second stirring wing having a spiral structure, wherein the upper end is coupled to the other end of the upper support and the lower end is coupled to the other end of the lower support.

In one example of the present invention, the stirring part further comprises preferably a lower wing inclined downward toward the discharge direction at the end of the lower support.

In one example of the present invention, the lower wing preferably comprises a first lower wing extending from the lower end of the first stirring wing to the lower portion of the lower support, but inclined downward in the discharge direction toward the rotating shaft of the stirring bar at one end of the lower support; and a second lower wing extending from the lower end of the second stirring wing to the lower portion of the lower support, but inclined downward in the discharge direction toward the rotating shaft of the stirring bar at the other end of the lower support.

In one example of the present invention, it is preferable that the first lower wing and the second lower wing have a triangular cross-section, but are provided symmetrically about the rotating shaft of the stirring bar.

In one example of the present invention, it is preferable that the first lower wing and the second lower wing are symmetrical about the rotating shaft of the stirring bar, but are spaced apart from each other at a distance greater than the diameter of the discharge port.

In one example of the present invention, it is preferable that the lower wing is located on a funnel part of the reactor, and has a structure inclined downward at the end of the lower support with an inclination corresponding to the inclined surface of the funnel part.

In one example of the present invention, it is preferable that in the stirring part, while the stirring wing and the lower wing are rotated in the rotational direction of the stirring bar, the stirring wing agitates the resin present in the upper portion of the funnel part, and the lower wing agitates the resin present in the funnel part.

It is preferable that the resin polymerization reaction device according to one example of the present invention further comprises a gas injection part injecting gas into the upper portion of the reactor, wherein the gas pressurizes the resin to a predetermined pressure so that the resin moves toward the discharge port.

In one example of the present invention, the diameter of the discharge opening is preferably in a range of 1/16 to 1/8 of the diameter of the discharge port.

In one example of the present invention, the diameter of the discharge opening is preferably in a range of 1/16 to 1/10 of the diameter of the discharge port.

In one example of the present invention, the diameter of the discharge opening is preferably in a range of 3/80 to 1/10 of the diameter of the discharge port.

Meanwhile, it is preferable that the resin discharge method according to one example of the present invention performs a resin polymerization reaction in a reactor using the resin polymerization reaction device, and discharges the resin from the reactor after the resin polymerization reaction.

### Advantageous Effects

The present invention can increase a discharge rate of a resin by increasing the discharge temperature of the resin through temperature control of a reactor to lower the viscosity of the resin, from which the effect of shortening the discharge time of the resin can be derived.

The present invention can adjust discharge amount and discharge rate of a resin by adjusting the discharge area of the resin through a perforated plate.

Then, the present invention can adjust a thickness of a biodegradable resin in accordance with requirements of a pelletizing process performed after a polymerization process through replacement of the perforated plate, thereby improving the overall process progress efficiency.

### Description of Drawings

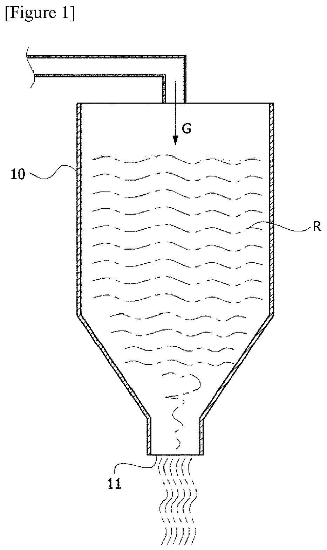

Figure 1 is a diagram for explaining a conventional resin polymerization reactor.
Figure 2 is a diagram for explaining a configuration diagram of a resin polymerization reaction device according to a preferred example of the present invention.
Figure 3 is a diagram for explaining an operating state of a resin polymerization reaction device according to a preferred example of the present invention.
Figure 4 is an interior perspective diagram of a reactor, which is a diagram for explaining a structure of a stirring part installed in the reactor, in one example of the present invention.
Figure 5 schematically illustrates a plan view of a perforated board according to one example of the present invention.
Figure 6 is an experimental graph of discharge rates according to diameters of a discharge opening of a perforated plate in one example of the present invention.
Figure 7 is an experimental graph of discharge amounts according to diameters of a discharge opening of a perforated plate in one example of the present invention.
Figure 8(a) is a resin volume fraction distribution image at the time when resin discharge starts in a reactor after a polymerization process. Figure 8(b) is a resin volume fraction distribution image at the time when resin discharge is almost completed in a reactor.

### Best Mode

Since the present invention can make various changes and have various examples, specific examples will be illustrated in the drawings, and described.

However, it is not intended to limit the present application to specific embodiments, and should be understood to include all modifications, equivalents, or substitutes included in the spirit and technical scope of the present application. In describing the present application, if it is determined that a detailed description of related known technologies may obscure the gist of the present application, the detailed description will be omitted.

Terms such as first and second may be used to describe various components, but the components should not be limited by the terms. The terms are used only for the purpose of distinguishing one component from another.

Terms used in the present application are only used to describe specific embodiments, and are not intended to limit the present application. Singular expressions include plural expressions unless the context clearly dictates otherwise.

In the present application, the term "comprise" or "have", and the like is intended to designate that there is a feature, number, step, operation, component, part, or combination thereof described in the specification, but it should be understood that the possibility of the presence or addition of one or more other features, or numbers, steps, operations, components, parts, or combinations thereof is not precluded.

Therefore, the constitutions shown in the examples described in this specification are only one of the most preferred examples of the present application and do not represent all the technical ideas of the present application, so that various equivalents and variations that can replace them at the time of filing the present application may exist. In addition, it should be understood that the accompanying drawings in the present application are enlarged or reduced for convenience of description.

Hereinafter, a resin polymerization reaction device and a resin discharge method according to a preferred example of the present invention will be described with reference to the accompanying drawings.

The present invention has been developed to polymerize a biodegradable resin and improve the discharge amount of the biodegradable resin in which the polymerization reaction has been completed.

The biodegradable resin is a resin that is easily degraded by biological actions such as microorganisms. The biodegradable resin includes polylactide (PLA), polybutylene adipate-co-terephthalate (PBAT), polylactate hydracrylate (PLH), and the like.

Here, polylactide (PLA), and PLH are eco-friendly resins made from raw materials extracted from corn starch, which have characteristics equivalent to general plastics during use, but are degraded 100% by microorganisms when discarded.

The biodegradable resin is discharged from a polymerization reactor in a viscous state by introducing a monomer and an initiator together into the reactor, and then undergoing a polymerization reaction.

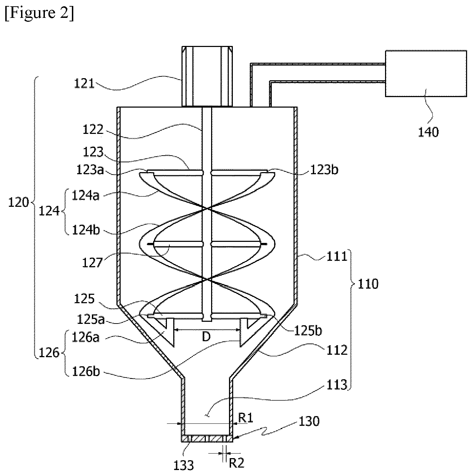

Figure 2 is a configuration diagram of a resin polymerization reaction device. Referring to Figure 2, a resin polymerization reaction device (100) according to a preferred example of the present invention comprises a reactor (110), a stirring part (120), a perforated plate (130), and a gas injection part (140).

The reactor (110) is a device in which a polymerization reaction for a resin (R) is performed. The reactor (110) is composed of a main body (111) having a cylindrical shape, a funnel part (112) extending to the lower part of the main body and having a funnel structure, and a discharge port (113) provided at the lower end of the funnel part (112).

The gas injection part (140) is connected to the upper portion of the reactor (110).

The gas injection part (140) is a device injecting gas (G) into the upper portion of the reactor (110). The gas (G) having a predetermined pressure is injected into the upper portion of the reactor (110) through the gas injection part (140) to push the resin (R) to the lower portion of the reactor (110). Nitrogen (N₂) may be used as the gas (G).

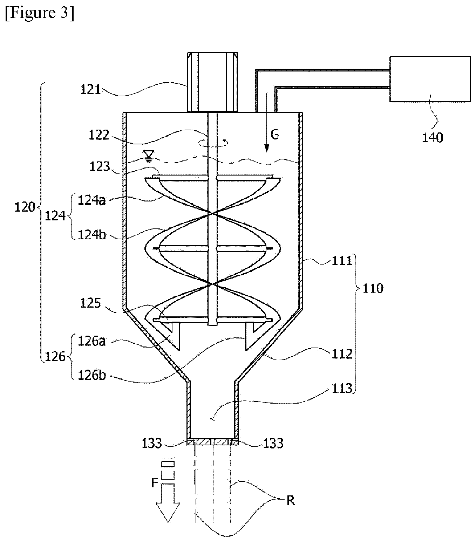

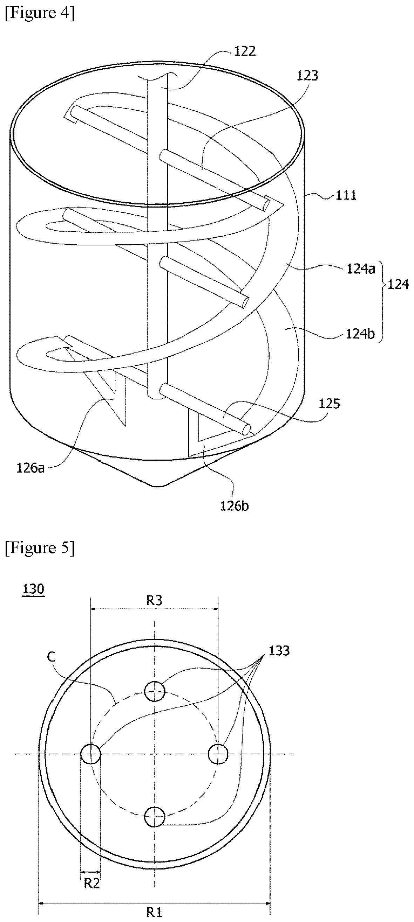

Figure 3 is an operating state diagram of a resin polymerization reaction device. Figure 4 is an interior perspective diagram of a reactor, which is a diagram for explaining a structure of a stirring part (120) installed in a reactor.

Referring to Figures 3 and 4, the stirring part (120) is rotatably installed inside the reactor (110). The stirring part (120) agitates the resin (R) after the polymerization reaction completion of the resin (R).

The stirring part (120) is composed of a stirring motor (121), a stirring bar (122), an upper support (123), a lower support (125), a stirring wing (124), a lower wing (126), and an intermediate support (127).

The stirring motor (121) is coupled to the stirring bar (122) outside the reactor (110). The stirring motor (121) provides the stirring bar (122) with a rotational force.

The stirring bar (122) is installed inside the reactor (110) in the discharge direction (F) of the resin (R). In the stirring bar (122), the rotating shaft of the stirring bar (122) is positioned coaxially with the center of the discharge port (113).

The upper support (123) and the lower support (125) are installed on the stirring bar (122). The upper support (123) and the lower support (125) are installed on the stirring bar (122) to be perpendicular to the discharge direction (F).

The upper support (123) is installed on the stirring bar (122) so as to be spaced apart from the upper end of the reactor (110) to the lower portion. The lower support (125) is installed on the lower portion of the stirring bar (122) in parallel with the upper support (123). The lower support (125) is provided with the lower wing (124) extending from the stirring wing (124).

The intermediate support (127) is installed between the upper support (123) and the lower support (125). The intermediate support (127) is spaced apart from the upper support (123) and the lower support (125) side by side to support the stirring wing (124).

The stirring wing (124) is coupled to the upper support (123) and the lower support (125) in a double helix structure. In order to implement the double helix structure, the stirring wing (124) is composed of a first stirring wing (124a) and a second stirring wing (124b).

The first stirring wing (124a) and the second stirring wing (124b) have a spiral structure.

In the first stirring wing (124a), the upper end is coupled to one end (123a) of the upper support and the lower end is coupled to one end (125a) of the lower support. In the second stirring wing (124b), the upper end is coupled to the other end (123b) of the upper support and the lower end is coupled to the other end (125b) of the lower support.

The lower wing (126) comprises a first lower wing (126a) and a second lower wing (126b).

Referring to Figures 2 to 4, the first lower wing (126a) and the second lower wing (126b) are symmetrical about the rotating shaft of the stirring bar (122), but are spaced apart from each other at a distance (D) greater than the diameter (R1) of the discharge port (113). The first lower wing (126a) and the second lower wing (126b) are positioned on the funnel part (112) of the reactor (110).

The first lower wing (126a) extends from the lower end of the first stirring wing (124a) to the lower portion of the lower support (125). The first lower wing (126a) is provided to be inclined downward in the discharge direction (F) toward the rotating shaft of the stirring bar (122) at one end (125a) of the lower support. The first lower wing (126a) has a triangular cross-section.

The second lower wing (126b) extends from the lower end of the second stirring wing (124b) to the lower portion of the lower support (125). The second lower wing (126b) is provided to be inclined downward in the discharge direction (F) toward the rotating shaft of the stirring bar (122) at the other end of the lower support (125). The second lower wing (126b) has a triangular cross-section.

In the stirring part (120), while the stirring wing (124) and the lower wing (126) are rotated in the rotational direction of the stirring bar (122), the stirring wing (124) agitates the resin (R) present on the upper portion of the funnel part (112), and the lower wing (126) agitates the resin (R) present in the funnel part (112).

Accordingly, as the lower wing (126) agitates the resin (R) present in the funnel part (112), the present invention can solve the problem that conventionally, the resin (R) solidifies around the discharge port (113) to block the discharge port (113).

In this example, the perforated plate (130) is installed in the discharge port (113) of the reactor (110). The perforated plate (130) is detachably installed in the discharge port (113). As the coupling structure between the perforated plate (130) and the discharge port (113), various structures within a range obvious to those skilled in the art can be applied.

Referring to Figures 2 and 5, the perforated plate (130) is provided with a plurality of discharge openings (133). Figure 2 is a configuration diagram of a resin polymerization reaction device, and Figure 5 schematically illustrates a plan view of a perforated plate.

The plurality of discharge openings (133) is disposed apart along a virtual concentric circle (C) having a predetermined diameter based on the center of the perforated plate (130).

As an example, the diameter (R3) of the concentric circle is preferably within a range of 1/4 to 5/7 of the diameter (R1) of the discharge port (113). For example, if the diameter (R1) of the discharge port (113) is 80mm, the diameter (R3) of the virtual concentric circle (C) is in the range of 20mm to 58mm.

As shown in Figure 5, the perforated plate (130) has a plurality of discharge openings (133) on the virtual concentric circle (C). The diameter (R3) of the virtual concentric circle (C) may be 1/2 of the diameter (R1) of the discharge port (113).

The plurality of discharge openings (133) is disposed radially apart along the virtual concentric circle (C) based on the center of the perforated plate (130). For each perforated plate (130), the plurality of discharge openings (133) is provided with the same diameter.

The diameter (R2) of the discharge opening (133) is preferably within a range of 3/80 to 10/80 of the diameter (R1) of the discharge port (113). For example, if the diameter (R1) of the discharge port (113) is 80mm, the discharge opening (133) has a diameter of 3mm to 10mm.

When the requirements of the pelletizing process want the resin (R) to be discharged at a high speed, it is preferable that the plurality of discharge openings (133) has a diameter (R21) of the discharge opening (133) in a range of 1/16 to 1/8 of the diameter (R1) of the discharge port (113). For example, if the diameter (R1) of the discharge port (113) is 80mm, the diameter (R2) of the discharge opening (133) is within the range of 5mm to 10mm.

When the requirements of the pelletizing process are not greatly influenced by the discharge speed, but the discharge amount of the resin (R) is important, the plurality of discharge openings (133) may have a diameter (R2) of the discharge opening (133) in a range of 3/80 to 1/16 of the diameter (R1) of the discharge port (113). For example, if the diameter (R1) of the discharge port (113) is 80mm, the diameter (R2) of the discharge opening (133) is in the range of 3mm to 5mm.

When the requirements of the pelletizing process require a large discharge amount of the resin (R) at a high speed, the plurality of discharge openings (133) may have a diameter (R2) of the discharge opening (113) in a range of 1/16 to 1/10 of the diameter (R1) of the discharge port (113). For example, if the diameter (R1) of the discharge port (113) is 80mm, the diameter (R2) of the discharge opening (133) is in the range of 5mm to 8mm.

The present invention can adjust the discharge amount and discharge rate of the resin (R) by adjusting the discharge area of the resin (R) through the perforated plate. In addition, the present invention can adjust the thickness of the biodegradable resin (R) in accordance with the requirements of the pelletizing process that proceeds after the polymerization process through replacement of the perforated plate, thereby improving the overall process progress efficiency.

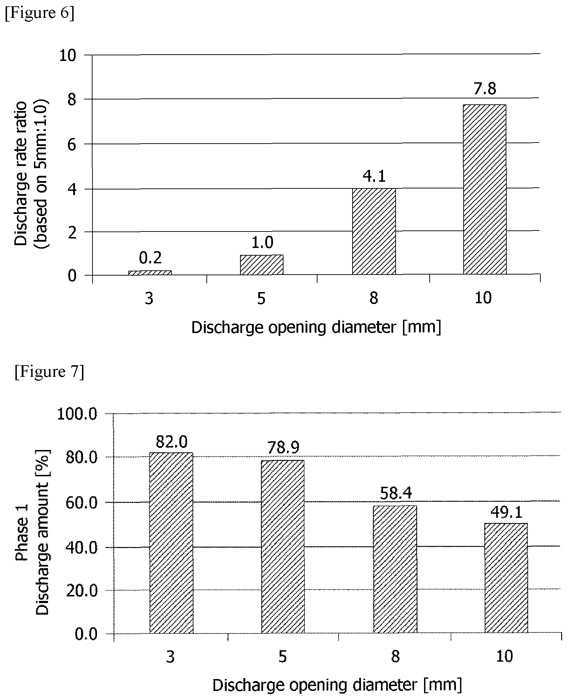

Hereinafter, referring to Table 1, and Figures 6 and 7, the discharge rate and the discharge amount increase rate according to the diameter (R2) of the discharge opening (133) will be described.

Table 1 is a result table of Experiments 1 to 4 for the ratio of the discharge rate and the ratio of the discharge amount of the resin (R) according to the diameter of the discharge opening. Figure 6 is a graph comparing the discharge rate ratios of the resin (R) according to the diameter (R2) of the discharge opening (133) of the perforated plate (130). Figure 7 is an experimental graph of the discharge amounts according to the diameter of the discharge opening of the perforated plate.

**[Table 1]**

| Experiment No. | Experiment 1 | Experiment 2 | Experiment 3 | Experiment 4 |
|---|---|---|---|---|
| Diameter of Discharge Opening | 5mm | 3mm | 8mm | 10mm |
| Ratio of Discharge Rate | 1.0 | 0.2 | 4.1 | 7.8 |
| Discharge Amount Ratio | 78.9% | 82% | 58.4% | 49.1% |

Experiment 1 is an experiment on the discharge rate ratio and discharge amount ratio of the resin (R) discharged from the perforated plate (130) having the discharge opening (133) with a diameter of 5mm. Referring to Table 1, it is assumed that the discharge rate ratio of the resin (R) discharged from the perforated plate (130) having the discharge opening (133) with a diameter of 5mm is 1. Then, referring to Table 1, it can be known that the discharge amount of the resin (R) discharged from the perforated plate (130) having the discharge opening (133) with a diameter of 5mm is 78.9% of the total discharge amount. Hereinafter, based on Experiment 1, the discharge rate ratio and the discharge amount ratio according to Experiments 2 to 4 will be reviewed.

Experiment 2 is an experiment on the discharge rate ratio and discharge amount ratio of the resin (R) discharged from the perforated plate (130) having the discharge opening (133) with a diameter of 3mm.

The discharge rate ratio of Experiment 2 is 0.2 times the discharge rate ratio of Experiment 1 when the discharge rate ratio of Experiment 1 is assumed to be 1. It can be known that the discharge amount of the resin (R) in Experiment 2 is 82% of the total discharge amount. It can be known that compared to the discharge opening (133) with 5mm, the discharge opening (133) with 3mm significantly reduces the discharge rate by 0.2 times, but the discharge amount ratio increases by 3.1% from 78.9% to 82%.

The discharge rate ratio of Experiment 3 is 4.1 times the discharge rate ratio of Experiment 1 when the discharge rate ratio of Experiment 1 is assumed to be 1. It can be known that the discharge amount of the resin (R) in Experiment 3 is 58.4% of the total discharge amount. It can be known that compared to the discharge opening (133) with 5mm, the discharge rate of the discharge opening (133) with 8mm increases by 4.1 times, but the ratio of the discharge amount decreases by 20.5% from 78.9% to 58.4%.

The discharge rate ratio of Experiment 4 is 7.8 times the discharge rate ratio of Experiment 1, when the discharge rate ratio of Experiment 1 is assumed to be 1. It can be known that the discharge amount of the resin (R) in Experiment 3 is 49.1% of the total discharge amount. It can be known that compared to the discharge opening (133) with 5mm, the discharge rate of the discharge opening (133) with 10mm rapidly increases by 7.8 times, but the discharge amount ratio rapidly decreases by 29.8% from 78.9% to 49.1%.

Summarizing the results of Table 1, it can be known that under the same conditions, the discharge rate of the resin (R) increases as the diameter (R2) of the discharge opening (133) increases, that is, as the discharge area increases. Then, it can be known that under the same conditions, the discharge amount of the resin (R) increases as the diameter (R2) of the discharge opening (133) decreases, that is, as the discharge area decreases. Here, the same conditions refer to the case where the type of resin (R) and the discharge temperature of the resin (R) are the same.

Therefore, from Experiments 1 to 4, the results are derived in which in order to increase the discharge amount of the resin (R), the diameter (R2) of the discharge opening (133) should be small, and in order to shorten the discharge time, the diameter (R2) of the discharge opening (133) should be large.

The reactor (110) controls the temperature of the reactor so that the discharge preheating temperature of the resin (R) is higher than the polymerization reaction temperature of the resin (R).

The reactor (110) heats the resin (R) to the discharge preheating temperature after the polymerization reaction completion of the resin (R). The discharge preheating temperature is a temperature in a range of 20 degrees to 50 degrees higher than the polymerization reaction temperature. The discharge preheating temperature is preferably a temperature 30 degrees higher than the polymerization reaction temperature.

The present invention can increase the discharge rate of the resin (R) by increasing the discharge temperature of the resin (R) through temperature control of the reactor to lower the viscosity of the resin (R), from which the effect of shortening the discharge time of the resin (R) can be derived.

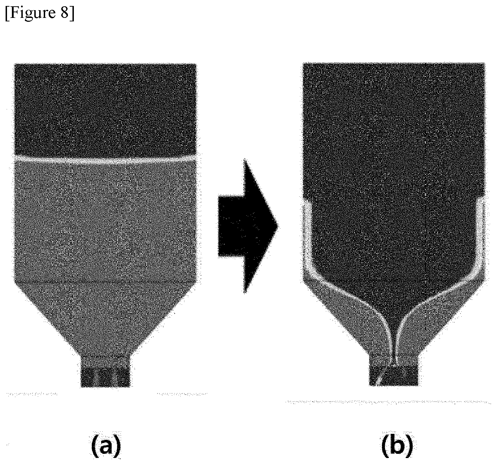

Referring to Figure 8, the flux flow of the resin (R) fluid before the discharge of the resin (R) and after completion of the discharge is as follows.

Figure 8(a) is a CFD image before the resin (R) is discharged from the reactor (110) after the polymerization process, and Figure 8(b) is a CFD image at the time when the discharge of the resin (R) from the reactor (110) is almost completed. The CFD image is a computer-analyzed image of the flux flow of the fluid.

Figure 8(a) is a volume fraction distribution image of a resin (R) at the time when the discharge of the resin (R) starts in a reactor (110) after a polymerization process. Figure 8(b) is a volume fraction distribution image of a resin (R) at the time when the discharge of the resin (R) is almost completed in a reactor (110).

Here, the volume fraction distribution image of the resin (R) is a computer-analyzed image of the flux flow of the resin (R) according to computational fluid dynamics.

The volume fraction is expressed as 0 or 1. Here, 0 is a region where the resin (R) does not exist, which is represented as a blue region in the image of Figure 8. Then, 1 is a region where the resin (R) exists, which is represented as a red region in the image of Figure 8.

Then, in Figure 8, the green region is a boundary between the red region (resin (R) presence) and the blue region (resin (R) absence). Referring to Figure 8(b), it can be known that when the discharge in the reactor (110) is almost completed, the resin (R) remains in the funnel part (112) of the reactor (110) and is not discharged.

**[Table 2]**

| | Experiment 1 | Experiment 5 |
|---|---|---|
| Discharge Temperature of Resin (R) | 180 degrees (polymerization reaction temperature) | 210 degrees (discharge preheating temperature) |
| Diameter of Discharge Opening | 5mm | 5mm |
| Ratio of Discharge Rate | 1.0 | 7.9 |
| Discharge Amount Ratio (%) | 78.9% | 81.5% |

The experimental result values in Table 2 are experimental result values for the matter that only the discharge temperature of the resin (R) is changed from 180 degrees to 210 degrees under the same conditions. Table 2 shows that the discharge temperature of the resin (R) is raised from 180 degrees, which is the polymerization reaction temperature, to 210 degrees, based on Experiment 1. Experiment 5 is the result values of the experiment in which only the discharge temperature of the resin (R) is changed from 180 degrees to 210 degrees in Experiment 1. However, the discharge preheating temperature is a temperature raised above a certain range from the polymerization reaction temperature, which is a temperature that can be adjusted according to the type of the resin (R) and the standard of the reactor (110), and is not necessarily limited to 210 degrees.

It can be known that the discharge rate of Experiment 5 is 81.5%, and thus increases 2.6% higher than 78.9% which is the discharge rate ratio of Experiment 1. It can be known that the discharge amount ratio of Experiment 5 is almost close to the discharge amount ratio of Experiment 1.

When the discharge rate ratio of Experiment 1 is assumed to be 1, it can be known that the discharge rate ratio of Experiment 5 is 7.9 times the discharge rate ratio of Experiment 2. It can be known therefrom that the discharge rate of the resin (R) is affected by the discharge temperature of the resin (R).

Combining Tables 1 and 2, the present invention can adjust the discharge amount of the resin (R) by adjusting the discharge area of the resin (R) through the perforated plate (130).

Furthermore, the present invention can increase the discharge rate of the resin (R) by increasing the discharge temperature of the resin (R) through temperature control of the reactor (110) to lower the viscosity of the resin (R), from which the effect of shortening the discharge time of the resin (R) can be derived.

Then, the present invention can adjust the thickness of the biodegradable resin (R) in accordance with the requirements of the pelletizing process that proceeds after the polymerization process through replacement of the perforated plate (130), thereby improving the overall process progress efficiency.

As the resin (R) is heated to the resin (R) discharge preheating temperature after the polymerization reaction completion of the resin (R) to lower the viscosity of the resin (R) and improve the fluidity of the resin (R), the present invention can improve the discharge efficiency of the biodegradable resin (R).

The present invention will be described specifically with reference to the following examples. However, the scope of the present invention is not limited by the following examples. The preferred examples of the present invention as described above are disclosed for the purpose of illustration, and various modifications, changes and additions can be made by those skilled in the art having ordinary knowledge of the present invention within the spirit and scope of the present invention, and such modifications, changes and additions should be considered to fall within the scope of the following claims.

## Claims

1. A resin polymerization reaction device comprising:
a reactor in which a resin is accommodated and a resin polymerization reaction is performed;
a stirring part installed inside the reactor to agitate the resin; and
a discharge port located at the lower portion of the reactor and provided with a plurality of discharge openings having an opening diameter within a range of 3/80 to 10/80 of the diameter of the discharge port.

2. The resin polymerization reaction device according to claim 1, wherein
the plurality of discharge openings has the same diameter.

3. The resin polymerization reaction device according to claim 1, wherein
the plurality of discharge openings is arranged apart from each other along a circumferential direction of a virtual concentric circle having a predetermined radius based on the center of the discharge port.

4. The resin polymerization reaction device according to claim 3, wherein
the virtual concentric circle has a diameter within a range of 1/4 to 5/7 of the diameter of the discharge port.

5. The resin polymerization reaction device according to claim 1, wherein
the plurality of discharge openings is arranged radially apart from each other based on the center of the discharge port.

6. The resin polymerization reaction device according to claim 1, further comprising
at least one perforated plate provided with the plurality of discharge openings and detachably coupled to the discharge port.

7. The resin polymerization reaction device according to claim 6, wherein
the perforated plate is provided with the plurality of discharge openings having the same diameter within the range of the opening diameter, and the range of the opening diameter is within a range of 3/80 to 10/80 of the diameter of the discharge port.

8. The resin polymerization reaction device according to claim 1, wherein
the reactor is temperature-controlled so that the discharge preheating temperature of the resin is higher than the polymerization reaction temperature of the resin.

9. The resin polymerization reaction device according to claim 8, wherein
the reactor heats the resin to the discharge preheating temperature after the polymerization reaction completion of the resin.

10. The resin polymerization reaction device according to claim 9, wherein
the discharge preheating temperature is a temperature in a range of 20 degrees to 50 degrees higher than the polymerization reaction temperature.

11. The resin polymerization reaction device according to claim 9, wherein
the discharge preheating temperature is a temperature 30 degrees higher than the polymerization reaction temperature.

12. The resin polymerization reaction device according to claim 1, wherein the stirring part comprises:
a stirring bar installed inside the reactor in the discharge direction of the resin;
a stirring motor providing the stirring bar with a rotational force;
an upper support installed on the upper portion of the stirring bar perpendicular to the discharge direction;
a lower support installed on the lower portion of the stirring bar parallel to the upper support; and
a stirring wing coupled to the upper support and the lower support in a double helix structure.

13. The resin polymerization reaction device according to claim 12, wherein the stirring wing comprises:
a first stirring wing having a spiral structure, wherein the upper end is coupled to one end of the upper support and the lower end is coupled to the other end of the lower support; and
a second stirring wing having a spiral structure, wherein the upper end is coupled to the other end of the upper support and the lower end is coupled to one end of the lower support.

14. The resin polymerization reaction device according to claim 13, wherein the stirring part further comprises
a lower wing inclined downward toward the discharge direction at the end of the lower support.

15. The resin polymerization reaction device according to claim 14, wherein the lower wing comprises:
a first lower wing extending from the lower end of the first stirring wing to the lower portion of the lower support, but inclined downward in the discharge direction toward the rotating shaft of the stirring bar at one end of the lower support; and
a second lower wing extending from the lower end of the second stirring wing to the lower portion of the lower support, but inclined downward in the discharge direction toward the rotating shaft of the stirring bar at the other end of the lower support.

16. The resin polymerization reaction device according to claim 15, wherein
the first lower wing and the second lower wing have a triangular cross-section, but are provided symmetrically about the rotating shaft of the stirring bar.

17. The resin polymerization reaction device according to claim 15, wherein
the first lower wing and the second lower wing are symmetrical about the rotating shaft of the stirring bar, but are spaced apart from each other at a distance greater than the diameter of the discharge port.

18. The resin polymerization reaction device according to claim 14, wherein
the lower wing is located on a funnel part of the reactor, and has a structure inclined downward at the end of the lower support with an inclination corresponding to the inclined surface of the funnel part.

19. The resin polymerization reaction device according to claim 18, wherein in the stirring part,
while the stirring wing and the lower wing are rotated in the rotational direction of the stirring bar, the stirring wing agitates the resin present in the upper portion of the funnel part, and the lower wing agitates the resin present in the funnel part.

20. The resin polymerization reaction device according to claim 1, further comprising a gas injection part injecting gas into the upper portion of the reactor, wherein the gas pressurizes the resin to a predetermined pressure so that the resin moves toward the discharge port.

21. The resin polymerization reaction device according to claim 1, wherein
the diameter of the discharge opening is in a range of 1/16 to 1/8 of the diameter of the discharge port.

22. The resin polymerization reaction device according to claim 1, wherein
the diameter of the discharge opening is in a range of 1/16 to 1/10 of the diameter of the discharge port.

23. The resin polymerization reaction device according to claim 1, wherein
the diameter of the discharge opening is in a range of 3/80 to 1/10 of the diameter of the discharge port.

24. A method for discharging a resin, comprising performing a resin polymerization reaction in a reactor using the resin polymerization reaction device of any one of claims 1 to 23, and discharging the resin from the reactor after the resin polymerization reaction.
